# FASCICULE DE BREVET EUROPEEN

(11) **EP 1 987 748 B1**
(45) Date de publication et mention de la délivrance du brevet: **21.07.2010**
(21) Numéro de dépôt: 08290402.0
(22) Date de dépôt: 25.04.2008
(51) Int. Cl.: A47J 31/057, A47J 31/44

(54) **Cafetière filtre comprenant un porte-filtre amovible**
Filterkaffeemaschine mit einem herausnehmbaren Filterhalter
Filter coffee-maker comprising a removable filter holder

(30) Priorité: 04.05.2007 FR 0703239
(43) Date de publication de la demande: 05.11.2008
(73) Titulaire: Seb SA, 69130 Ecully (FR)
(72) Inventeur: Lancon, Franck, 14790 Mouen (FR)
(74) Mandataire: Kiehl, Hubert

(56) Documents cités:
- EP-A- 1 338 232
- EP-A- 1 483 994

## Description

La présente invention se rapporte à une cafetière filtre comprenant un porte-filtre amovible. Plus particulièrement, elle se rapporte à une cafetière filtre comprenant :
- un boîtier comportant un générateur d'eau chaude relié à une sortie d'eau chaude débouchant à l'extérieur du boîtier ;
- un porte-filtre définissant un réceptacle susceptible de recevoir un produit à infuser et amovible par rapport au boîtier, ledit boîtier présentant un logement apte à recevoir ledit porte-filtre ; et
- un couvercle présentant une entrée d'eau chaude communiquant avec une douchette, ledit couvercle étant mobile entre une position ouverte pour laquelle il laisse accès au réceptacle du porte-filtre, et une position fermée dans laquelle l'entrée d'eau chaude du couvercle coopère avec la sortie d'eau chaude du boîtier et pour laquelle le couvercle recouvre le réceptacle du porte-filtre placé dans le logement du boîtier, de sorte que la douchette est susceptible d'alimenter en eau chaude ledit réceptacle.

Les cafetières comprenant un couvercle mobile équipé d'une douchette et venant se connecter à une sortie d'eau chaude en position fermée pour arroser la mouture de café, ou tout autre produit placé dans le porte-filtre, sont connues, notamment du document EP-A-1 483 994 et du document EP 1338232 A. L'un des avantages de ce type de cafetière est de faciliter la mise en place et le retrait du porte-filtre par rapport au logement correspondant du boîtier, étant donné que la douchette mobile peut être écartée de sa position d'arrosage. Le porte-filtre peut être alors abaissé ou soulevé de manière très naturelle selon une direction sensiblement verticale. Un autre avantage lié à ce type de cafetière est l'encombrement vertical réduit qu'elle permet de par la possibilité de contact entre le couvercle et le débouché du réceptacle du porte-filtre et la faible épaisseur nécessaire pour le couvercle.

Toutefois, si l'opération de placement ou de retrait du porte-filtre dans ces cafetières ne requiert pas une dextérité particulière, elle nécessite tout de même deux opérations de la part de l'utilisateur. En effet, avant la préparation d'une infusion, il faut placer le porte-filtre dans le logement correspondant du boîtier puis rabattre le couvercle en position fermée s'il était déjà ouvert, et par la suite il faut placer le couvercle en position ouverte avant de retirer le porte-filtre. Ces doubles opérations peuvent s'avérer fastidieuses pour certains utilisateurs, d'autant plus que l'engagement de l'entrée d'eau chaude du couvercle avec la sortie du boîtier peut nécessiter un certain effort de l'utilisateur ou nécessiter un certain poids du couvercle. D'autre part, ces couvercles liés au boîtier présentent des dimensions importantes, correspondant généralement à la surface horizontale supérieure du boîtier et de ce fait nécessitent un espace dégagé important pour permettre leur ouverture, ce qui réduit l'intérêt de l'encombrement vertical réduit de la cafetière.

La présente invention a donc pour objet de proposer une cafetière ayant les avantages des machines à couvercle mobile, mais ne présentant pas les inconvénients mentionnés ci-dessus des cafetières de ce type connues à ce jour.

A cet effet, la présente invention a pour objet une cafetière filtre du type précité, caractérisée en ce que le porte-filtre et le couvercle forment un ensemble articulé qui est équipé d'un dispositif de retenue magnétique comprenant un premier organe fixé au porte-filtre et un deuxième organe fixé au couvercle, qui sont agencés pour être couplés magnétiquement lorsque le couvercle est en position fermée.

Du fait que le couvercle forme un ensemble articulé avec le porte-filtre, le placement ou le retrait du porte-filtre dans ou hors le logement correspondant du boîtier peut se faire d'un seul geste. D'autre part, il apparaît que les dimensions du couvercle peuvent être réduites de manière à couvrir quasiment uniquement le débouché du réceptacle du porte-filtre et une surface correspondant au débouché de la sortie d'eau chaude. L'espace nécessaire à la machine peut être également réduit en ouvrant le couvercle lorsque le porte-filtre est enlevé de son logement, par exemple placé sur un plan de travail. En effet, selon la configuration du logement, le placement ou le retrait du porte-filtre peut de plus être réalisé avec un mouvement vertical de hauteur réduite. Bien entendu, l'utilisation de la cafetière nécessite toujours un mouvement de fermeture et d'ouverture du couvercle, mais celui-ci peut être réalisé concomittamment aux opérations de remplissage ou de nettoyage du porte-filtre, ce qui s'avère plus pratique et naturel pour beaucoup d'utilisateurs. Ceci d'autant plus qu'en dehors du logement, le mouvement d'ouverture et de fermeture du couvercle ne risque pas alors d'être entravé par l'engagement avec la sortie d'eau chaude du boîtier.

Toutefois, la Demanderesse a déterminé qu'il était nécessaire de prévoir un dispositif de retenue du couvercle en position fermée sur le porte-filtre pour conserver une utilisation pratique et fiable, étant entendu qu'un dispositif de verrouillage positif entre ces éléments compliquerait la tâche de l'utilisateur. En effet, un couvercle de dimension réduite et facile à manipuler, ne permet pas de garantir une coopération correcte de son entrée d'eau chaude avec la sortie d'eau chaude du boîtier lors de la simple mise en place du porte-filtre dans le logement, et par conséquent l'absence de fuites d'eau chaude.

Un dispositif magnétique permet de remplir cette fonction de retenue de manière particulièrement avantageuse. En effet, un tel dispositif permet de créer une force de retenue de valeur très précise et ne gênant que très peu la manipulation du couvercle, car cette force disparaît rapidement dès que les premier et deuxième organes sont écartés l'un de l'autre. Ceci ne serait pas le cas avec un dispositif de retenue élastique. De plus, il apparaît qu'un tel dispositif permet de mieux se rendre compte d'un mauvais engagement de l'entrée d'eau chaude du couvercle sur la sortie du boîtier. Dès que le couvercle est légèrement écarté de sa position fermée, en raison d'une mauvaise coopération de l'entrée du couvercle avec la sortie d'eau chaude, le dispositif de retenue n'exerce plus d'effort et il n'y a pas du tout d'engagement. Le couvercle est alors dans une position anormale aisément détectable visuellement par l'utilisateur.

Dans des modes de réalisation préférés de l'invention, on a recours, en outre, à l'une ou l'autre des dispositions suivantes :
- le premier organe du dispositif de retenue magnétique comprend un premier aimant permanent, tandis que le deuxième organe comprend un deuxième aimant permanent, chacun des premier et deuxième aimants étant recouvert d'une couche de matière plastique et présentant une polarité orientée vers l'autre de manière à augmenter la force du couplage magnétique ; cette disposition permet de réaliser un compromis avantageux entre la force du couplage magnétique et la rapidité de la disparition de celle-ci lorsque le couvercle est ouvert ;
- le premier organe du dispositif de retenue magnétique est agencé à proximité de l'entrée d'eau chaude du couvercle ; cette disposition permet d'exercer la force de retenue du couvercle au plus près de la contrainte exercée par la sortie d'eau chaude du boîtier ;
- le porte-filtre présente un pourtour supérieur entourant le débouché du réceptacle et sous lequel est agencé le premier organe de retenue magnétique, et le couvercle présente une face inférieure sur laquelle le deuxième organe de retenue magnétique est agencé pour être adjacent au pourtour supérieur et en regard du premier organe lorsque le couvercle est en position fermée ;
- le porte-filtre présente, au moins dans sa partie supérieure, une section transversale globalement régulière avec une échancrure, et la sortie d'eau chaude du boîtier est conformée pour venir occuper cette échancrure lorsque le porte-filtre est en place dans le logement dudit boîtier ; il est ainsi possible d'imposer un alignement correct du porte-filtre avec la sortie d'eau chaude et par conséquent une correspondance correcte de celle-ci avec l'entrée d'eau chaude du couvercle lorsque ce dernier est refermé ;
- le couvercle est articulé sur le porte-filtre par un axe de pivotement horizontal, et le couvercle s'étend essentiellement dans un plan horizontal en position fermée, l'entrée d'eau chaude coopérant avec la sortie du boîtier selon un mouvement sensiblement vertical ;
- l'axe de pivotement du couvercle est agencé de manière à être situé du côté opposé à la sortie d'eau chaude du boîtier lorsque le porte-filtre est en place dans le logement ;
- le porte-filtre présente une poignée à proximité et au-dessus de laquelle est agencé l'axe de pivotement du couvercle ;
- l'axe de pivotement du couvercle est disposé selon une direction perpendiculaire à la direction principale de la poignée, et un organe d'actionnement du couvercle est relié à celui-ci de manière à pouvoir être actionné tout en tenant la poignée.

D'autres caractéristiques et avantages ressortiront de la description qui va suivre, donnée à titre d'exemple non limitatif, en regard des figures dans lesquelles :
- la figure 1 est une vue en perspective d'une cafetière filtre selon l'invention comprenant un porte-filtre amovible dont le couvercle n'a pas été représenté ;
- la figure 2 est une vue en perspective de dessous du couvercle du porte-filtre représenté à la figure 1 ; et
- la figure 3 est une vue en coupe partielle simplifiée selon la ligne III-III de la figure 1, avec le couvercle.

Sur les différentes figures, les mêmes références désignent des éléments identiques ou similaires.

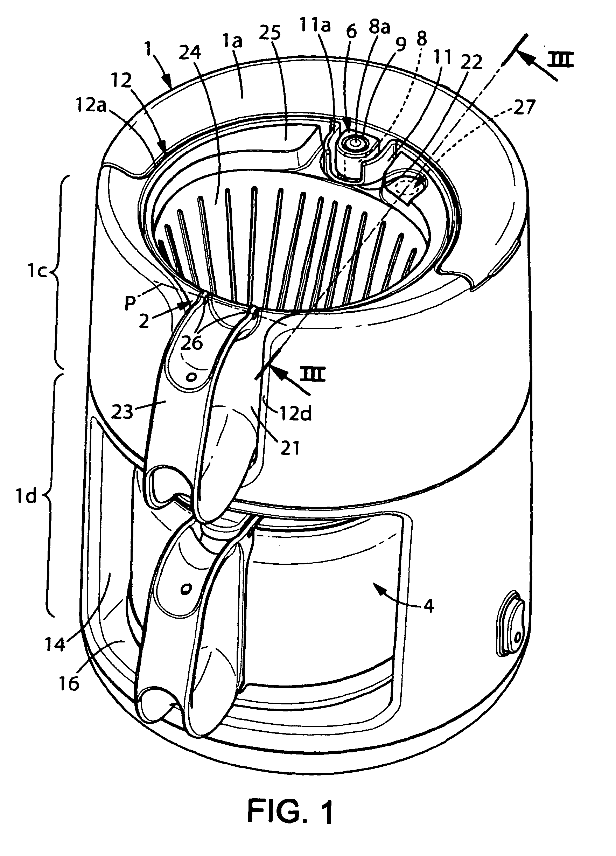

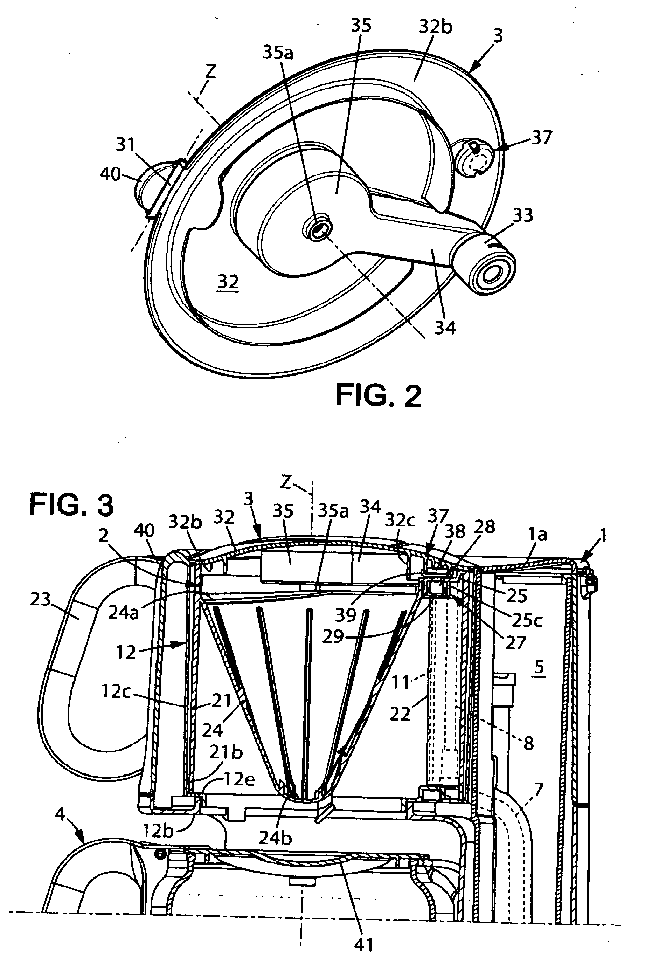

A la figure 1, est représentée une cafetière filtre, c'est-à-dire une machine de préparation de boisson délivrant de l'eau chaude quasiment à la pression atmosphérique au-dessus d'un produit à infuser, et plus particulièrement de la mouture de café. La cafetière filtre comprend un boîtier 1 recevant un porte-filtre 2 muni d'un couvercle 3, non représenté à la figure 1 mais visible à la figure 2, et une verseuse 4 recueillant la boisson préparée.

Comme cela est bien connu, le boîtier 1 comporte un réservoir d'eau 5 visible à la figure 3, et des moyens de chauffage électrique, non représentés, permettant de délivrer l'eau du réservoir 5 à haute température et faible pression jusqu'à une sortie d'eau chaude 6 débouchant à l'extérieur du boîtier 1.

Dans le mode de réalisation représenté, la sortie d'eau chaude 6 est alimentée par un tube flexible 7 et un tube vertical fixe 8 dont l'extrémité supérieure 8a comporte un orifice latéral non visible. Ce tube fixe 8 est entouré dans sa partie supérieure faisant saillie par une bague 9 sollicitée en position haute par un ressort. L'intérêt de la bague 9 apparaîtra plus clairement par la suite, mais il est à noter que la sortie d'eau chaude 6 du boîtier 1 pourrait être constituée par un simple tube et que celui-ci n'est pas nécessairement placé verticalement.

L'ensemble des pièces intérieures au boîtier de la sortie d'eau chaude 6, sont logées dans un évidement de celui-ci délimité par une paroi 11 en portion de cylindre et présentant à son extrémité supérieure 11a une ouverture échancrée protégeant la sortie d'eau chaude 6.

Comme cela est visible à la figure 1, le boîtier 1 comporte un logement 12 présentant un débouché supérieur 12a situé dans la face supérieure la du boîtier 1 et s'étendant sur une portion supérieure 1c du boîtier 1 jusqu'à un débouché inférieur 12b visible à la figure 3. Le logement 12 présente une paroi latérale 12c (figure 3) globalement cylindrique d'axe central vertical Z, mise à part une échancrure frontale 12d (figure 1) et une portion dans laquelle la paroi 11 protégeant les éléments de la sortie d'eau chaude 6 fait saillie. Ce logement 12 du boîtier 1 est configuré pour recevoir le porte-filtre 2.

Le boîtier 1 comporte de plus dans une portion inférieure 1d, une niche 14 débouchant en façade et délimitée vers le bas par un socle 16. La niche 14 est adaptée pour recevoir la verseuse 4 destinée à recueillir et servir la boisson.

Comme cela est visible à la figure 3, le porte-filtre 2 comporte une paroi latérale 21 globalement cylindrique, mise à part une échancrure 22 en portion de cylindre. On notera que la paroi latérale périphérique 21 ainsi définie du porte-filtre 2, a une section transversale qui correspond étroitement à la section transversale du logement 12. Le porte-filtre 2 ne peut donc prendre qu'une position et une orientation relativement précises par rapport au boîtier 1, et donc par rapport à la sortie d'eau chaude 6 de celui-ci.

Le porte-filtre 2 comporte également une poignée 23 se présentant sous forme d'un anneau situé dans un plan radial par rapport à l'axe vertical central Z du porte-filtre et agencé pour venir en correspondance avec l'échancrure frontale 12d du boîtier lorsque le porte-filtre est en place dans le logement 12.

La paroi latérale 12c du logement 12 du boîtier comporte à proximité de son débouché inférieur 12b un épaulement 12e qui forme une zone d'appui sur laquelle le porte-filtre 2 vient reposer par l'extrémité inférieure 21b de sa paroi périphérique 21. Le porte-filtre 2 étant ainsi en simple appui et le logement 12 présentant un débouché supérieur 12a largement ouvert, il est très aisé pour un utilisateur de le placer dans le, ou de le retirer hors du, logement 12 en effectuant un mouvement sensiblement vertical très naturel. Il est à noter que dans le mode de réalisation représenté, la hauteur de la paroi latérale du logement 12 correspond sensiblement à la hauteur du porte-filtre 2 et par conséquent le mouvement vertical doit se faire sur une hauteur sensiblement égale à la hauteur du porte-filtre. Néanmoins, il est parfaitement possible de prévoir une échancrure frontale 12d bien plus large, de sorte que le porte-filtre 2 pourrait être retiré en effectuant un mouvement horizontal après un mouvement vertical de hauteur réduite.

Le porte-filtre 2 comporte également un réceptacle 24 destiné à supporter de manière habituelle la mouture de café placée dans un filtre papier conique. L'extrémité inférieure 24b du réceptacle 24 comporte un orifice de sortie débouchant au-dessus d'un couvercle récolte-gouttes 41 de la verseuse 4. Le réceptacle 24 présente un débouché supérieur 24a largement ouvert et relié à la paroi latérale 21 par un pourtour supérieur 25. Comme on peut le voir à la figure 1, le pourtour supérieur 25 a une largeur réduite de sorte que la section transversale du porte-filtre n'est pas beaucoup supérieure à la section du débouché 24a dimensionnée pour recevoir un filtre papier standard.

Comme cela est visible à la figure 1, le porte-filtre 2 comporte à proximité du pourtour supérieur 25, une paire d'anneaux 26 alignés sur un axe horizontal P. Plus particulièrement, les anneaux 26 sont situés sur le dessus de la poignée 23 de manière adjacente à la paroi latérale 21, de sorte qu'ils sont situés de manière diamétralement opposée par rapport à l'échancrure 22 de cette paroi latérale 21 et disposés selon l'axe P perpendiculaire à l'axe radial de la poignée.

Un premier organe de retenue 27 est agencé sur le pourtour supérieur 25 du porte-filtre 2 dans la position indiquée par des traits discontinus sur la figure 1, c'est-à-dire à proximité du sommet 22a de l'échancrure 22 et donc de la sortie d'eau chaude 6. Comme cela est visible à la figure 3, le premier organe de retenue magnétique 27 comporte un logement 25c qui est formé par une projection tubulaire s'étendant vers le bas depuis le pourtour supérieur 25, et dans lequel est placé un premier aimant permanent 28 maintenu en position par un capuchon 29.

Le couvercle 3, représenté à la figure 2, comporte un axe 31 se présentant ici sous forme d'une tige intégralement formée avec le couvercle et avec des extrémités biseautées qui viennent s'encliqueter dans les anneaux 26 du porte-filtre 2. Ainsi assemblés par encliquetage, le porte-filtre 2 et le couvercle 3 forment un ensemble unitaire, articulé par la liaison pivotante d'axe P.

Il est néanmoins parfaitement possible d'avoir une articulation démontable entre le couvercle et le porte-filtre, par exemple pour faciliter des opérations de nettoyage.

La principale portion du couvercle 3 est formée par une paroi 32 légèrement bombée et circulaire de diamètre correspondant sensiblement au diamètre de la paroi latérale 21 du porte-filtre 2. Le couvercle 3 présente donc une surface sensiblement égale à la section transversale du porte-filtre 2 plus la surface supérieure de la sortie d'eau chaude 6 correspondant à la section de la paroi de protection 11. Cette surface n'est pas non plus beaucoup supérieure à la section transversale supérieure du porte-filtre 2 étant donné l'imbrication de la sortie d'eau chaude 6 dans cette section.

La face inférieure 32b de la paroi 32 du couvercle comporte également une entrée d'eau chaude 33 débouchant dans un conduit 34 qui aboutit à une douchette 35 présentant un orifice central inférieur 35a, et un deuxième organe de retenue magnétique 37.

Plus particulièrement, l'entrée d'eau chaude 33 est formée par une bague analogue à la bague 9 de la sortie 6, qui coopère avec celle-ci pour l'abaisser depuis la position représentée à la figure 1, jusqu'à une position pour laquelle l'orifice latéral du tube 8 est découvert. Ce système limite fortement les risques de projection d'eau chaude et l'on pourra se référer au document EP-A-1 483 994 pour plus de détails.

L'entrée d'eau chaude 33 du couvercle est donc conformée pour venir coopérer avec la sortie d'eau chaude 6 du boîtier par un mouvement de translation verticale vers le bas, de sorte qu'une communication fluidique étanche s'établit entre celles-ci dans la configuration représentée à la figure 3, c'est-à-dire lorsque l'ensemble porte-filtre 2 et couvercle 3 en position fermée, est correctement positionné dans le logement 12 du boîtier 1.

Comme cela est mieux visible sur la figure 3, le deuxième organe de retenue magnétique 37 comporte, de manière analogue au premier organe 27, un aimant permanent 38 disposé dans un logement tubulaire 32c faisant saillie sur la face inférieure 32b du couvercle 3. Ce logement 32c est fermé par un capuchon 39 en matière plastique protégeant l'aimant. L'aimant 38 lié au couvercle 3 est orienté de manière à présenter en regard de l'aimant 28 du porte-filtre 2, un pôle opposé à ce dernier. Ceci permet une force de couplage augmentée entre les premier (27) et deuxième (37) organes de retenue magnétique, qui compense les couches de matière plastique formées par le pourtour 25 et le capuchon 39.

Le couvercle 3 présente en outre une patte d'actionnement 40 s'étendant à partir de l'axe de pivotement 31 selon une direction radiale, de manière à être agencé au-dessus de la poignée 23. En exerçant sur la patte 40 une pression avec le pouce et tout en tenant la poignée 23 avec la main, il est possible de commander le pivotement du couvercle 3 d'une position fermée pour laquelle il recouvre le porte-filtre 2 à une position ouverte pour laquelle il laisse libre accès au réceptacle 24.

Pour utiliser la cafetière filtre représentée, l'utilisateur remplit le réceptacle 24 du porte-filtre 2 avec un produit à infuser, et referme le couvercle 3. Le mouvement de fermeture est très aisé du fait du pivotement libre et de l'absence de tout élément venant interférer avec le trajet du couvercle 3. Arrivés en position fermée, les premier et deuxième organes de retenue magnétique (27,37) sont suffisamment proches l'un de l'autre pour assurer un couplage de leurs lignes de champ magnétique. Une force de retenue significative, de l'ordre de 1 Newton, et précise tout au cours de l'utilisation de la cafetière est ainsi créée. Il est à noter que ces opérations sont de préférence réalisées hors du logement 12 du boîtier et donc dans un espace dégagé et pratique pour l'utilisateur.

L'utilisateur met ensuite en place l'ensemble unitaire formé par le porte-filtre 2 et le couvercle 3 en position fermée, qui sont magnétiquement retenus ensemble, dans le logement 12 prévu à cet effet dans le boîtier 1 de la cafetière. Du fait de la coopération de la paroi de protection 11 et de l'échancrure 22, et/ou de la poignée 23 avec l'échancrure frontale 12d, le porte-filtre 2 est correctement orienté par rapport au boîtier 1 et l'entrée d'eau chaude 33 du couvercle 3 vient en correspondance avec la sortie d'eau chaude 6. A la fin de cette opération de placement, le porte-filtre 2 et le couvercle 3 effectuent un mouvement d'axe vertical orienté vers le bas qui assure l'engagement de l'entrée d'eau chaude 33 sur la sortie d'eau chaude 6. La préparation d'une boisson peut alors être commandée sans opération supplémentaire de mise en place de la part de l'utilisateur.

A la fin de la préparation d'une boisson, l'utilisateur retire l'ensemble porte-filtre 2 et couvercle 3 hors du logement 12 par un mouvement vertical vers le haut qui est très naturel. Au cours de ce mouvement, l'entrée 33 et la sortie 6 d'eau chaude sont désengagées. Il est alors relativement aisé pour l'utilisateur de placer le couvercle 3 en position ouverte, par exemple en exerçant une pression du pouce sur la patte d'actionnement 40 pour vaincre la force de retenue magnétique du dispositif (27, 37).

Bien entendu, le mode de réalisation décrit ci-dessus n'est pas limitatif, de nombreuses variantes de réalisation pouvant être adoptées. A titre d'exemple, l'articulation entre le porte-filtre 2 et le couvercle 3 peut être différente d'une liaison pivotante, et le couplage entre l'entrée 33 et la sortie 6 d'eau chaude peut être réalisé selon un mouvement différent d'un mouvement orienté vers le bas.

## Revendications

1. Cafetière filtre comprenant :
- un boîtier (1) comportant un générateur d'eau chaude relié à une sortie d'eau chaude (6) débouchant à l'extérieur du boîtier ;
- un porte-filtre (2) définissant un réceptacle (24) susceptible de recevoir un produit à infuser et amovible par rapport au boîtier (1), ledit boîtier présentant un logement (12) apte à recevoir ledit porte-filtre (2) ; et
- un couvercle (3) présentant une entrée d'eau chaude (33) communiquant avec une douchette (35), ledit couvercle (3) étant mobile entre une position ouverte pour laquelle il laisse accès au réceptacle (24) du porte-filtre, et une position fermée dans laquelle l'entrée d'eau chaude (33) du couvercle (3) coopère avec la sortie d'eau chaude (6) du boîtier (1) et pour laquelle le couvercle (3) recouvre le réceptacle (24) du porte-filtre placé dans le logement (12) du boîtier, de sorte que la douchette (35) est susceptible d'alimenter en eau chaude ledit réceptacle (24),
**caractérisée en ce que** le porte-filtre (2) et le couvercle (3) forment un ensemble articulé qui est équipé d'un dispositif de retenue magnétique comprenant un premier organe (27) fixé au porte-filtre (2) et un deuxième organe (37) fixé au couvercle (3), qui sont agencés pour être couplés magnétiquement lorsque le couvercle (3) est en position fermée.

2. Cafetière filtre selon la revendication 1, dans laquelle le premier organe (27) du dispositif de retenue magnétique comprend un premier aimant permanent (28), tandis que le deuxième organe (37) comprend un deuxième aimant permanent (38), chacun des premier et deuxième aimants (28 ; 38) étant recouvert d'une couche de matière plastique (25 ; 39) et présentant une polarité orientée vers l'autre de manière à augmenter la force du couplage magnétique.

3. Cafetière filtre selon la revendication 1 ou 2, dans laquelle le premier organe (27) du dispositif de retenue magnétique est agencé à proximité de l'entrée d'eau chaude (33) du couvercle (3).

4. Cafetière filtre selon l'une quelconque des revendications précédentes, dans laquelle le porte-filtre (2) présente un pourtour supérieur (25) entourant le débouché du réceptacle (24) et sous lequel est agencé le premier organe (27) de retenue magnétique, et le couvercle (3) présente une face inférieure (32b) sur laquelle le deuxième organe (37) de retenue magnétique est agencé pour être adjacent au pourtour supérieur (25) et en regard du premier organe (27) lorsque le couvercle (3) est en position fermée.

5. Cafetière filtre selon l'une quelconque des revendications précédentes, dans laquelle le porte-filtre (2) présente, au moins dans sa partie supérieure, une section transversale globalement régulière avec une échancrure (22), et la sortie d'eau chaude (6) du boîtier (1) est conformée pour venir occuper cette échancrure (22) lorsque le porte-filtre (2) est en place dans le logement (12) dudit boîtier.

6. Cafetière filtre selon l'une quelconque des revendications précédentes, dans laquelle le couvercle (3) est articulé sur le porte-filtre (2) par un axe de pivotement horizontal (31), et dans laquelle le couvercle (3) s'étend essentiellement dans un plan horizontal en position fermée, l'entrée d'eau chaude (33) coopérant avec la sortie (6) du boîtier (1) selon un mouvement sensiblement vertical.

7. Cafetière filtre selon la revendication 6, dans laquelle l'axe de pivotement (31) du couvercle (3) est agencé de manière à être situé du côté opposé à la sortie (6) d'eau chaude du boîtier (1) lorsque le porte-filtre (2) est en place dans le logement (12).

8. Cafetière filtre selon l'une des revendications 6 ou 7, dans laquelle le porte-filtre (2) présente une poignée (23) à proximité et au-dessus de laquelle est agencé l'axe de pivotement (31) du couvercle (3).

9. Cafetière filtre selon la revendication 8, dans laquelle l'axe de pivotement (31) du couvercle (3) est disposé selon une direction (P) perpendiculaire à la direction principale de la poignée (23), et un organe d'actionnement (40) du couvercle est relié à celui-ci de manière à pouvoir être actionné tout en tenant la poignée (23).

## Claims

1. A filter coffee maker comprising:
- a housing (1) comprising a hot water generator connected to a hot water outlet (6) opening outside the housing;
- a filter holder (2) defining a container (24) capable of receiving a product to be infused and removable from the housing (1), said housing having a recess (12) capable of receiving said filter holder (2); and
- a lid (3) with a hot water inlet (33) communicating with a showerhead (35), said lid (3) being mobile between an open position in which it allows access to the container (24) of the filter holder, and a closed position in which the hot water inlet (33) on the lid (3) cooperates with the hot water outlet (6) on the housing (1) and in which the lid (3) covers the container (24) of the filter holder placed in the recess (12) of the housing, such that the showerhead (35) is capable of feeding hot water to said container (24),
**characterised in that** the filter holder (2) and the lid (3) form an articulated assembly which is equipped with a magnetic holding device comprising a first element (27) attached to the filter holder (2) and a second element (37) attached to the lid (3), which are arranged in such a manner as to be coupled magnetically when the lid (3) is in closed position.

2. A filter coffee maker according to claim 1, in which the first element (27) of the magnetic holding device comprises a first permanent magnet (28), whereas the second element (37) comprises a second permanent magnet (38), each of the first and second magnets (28; 38) being covered by a layer of plastic material (25; 39) and having a polarity oriented toward one another such as to increase the force of the magnetic coupling.

3. A filter coffee maker according to claim 1 or 2, in which the first element (27) of the magnetic holding device is arranged in proximity to the hot water inlet (33) on the lid (3).

4. A filter coffee maker according to any one of the preceding claims, in which the filter holder (2) has an upper circumference (25) surrounding the opening of the container (24) and under which is arranged the first magnetic holding element (27), and the lid (3) has a lower face (32b) on which the second magnetic holding element (37) is arranged to be adjacent to the upper circumference (25) and opposite the first element (27) when the lid (3) is in closed position.

5. A filter coffee maker according to any one of the preceding claims, in which the filter holder (2) has, at least in its upper part, a generally regular transversal section with a notch (22), and the hot water outlet (6) on the housing (1) can occupy this recess (22) when the filter holder (2) is in place in the recess (12) of said housing.

6. A filter coffee maker according to any one of the preceding claims, in which the lid (3) is articulated on the filter holder (2) by a horizontal pivot pin (31), and in which the lid (3) extends essentially in a horizontal plane in closed position, the hot water inlet (33) cooperating with the outlet (6) on the housing (1) in a substantially vertical movement.

7. A filter coffee maker according to claim 6, in which the pivot pin (31) of the lid (3) is arranged such as to be located on the opposite side to the hot water outlet (6) on the housing (1) when the filter holder (2) is in place in the recess (12).

8. A filter coffee maker according to one of claims 6 or 7, in which the filter holder (2) has a handle (23) in proximity and above which the pivot pin (31) of the lid (3) is arranged.

9. A filter coffee maker according to claim 8, in which the pivot pin (31) of the lid (3) is arranged in a direction (P) perpendicular to the main direction of the handle (23), and a lid actuating member (40) is connected to the lid such that it can be actuated while holding the handle (23).

## Patentansprüche

1. Filterkaffeemaschine, umfassend:
- ein Gehäuse (1) mit einem Heißwassererzeuger, der mit einem Heißwasseraustritt (6) verbunden ist, der in das Äußere des Gehäuses mündet;
- einen Filterhalter (2), der ein Behältnis (24) definiert, das ein aufzubrühendes Produkt aufnehmen kann und in Bezug auf das Gehäuse (1) abnehmbar ist, wobei das Gehäuse eine Aufnahme (12) aufweist, die imstande ist, den Filterhalter (2) aufzunehmen; und
- einen Deckel (3), der einen Heißwassereintritt (33) aufweist, der mit einer Brause (35) verbunden ist, wobei der Deckel (3) zwischen einer offenen Position, in der er den Zugang zum Behältnis (24) des Filterhalters freigibt, und einer geschlossenen Position beweglich ist, in der der Heißwassereintritt (33) des Deckels (3) mit dem Heißwasseraustritt (6) des Gehäuses (1) zusammenwirkt und in der der Deckel (3) das Behältnis (24) des Filterhalters, der sich in der Aufnahme (12) des Gehäuses befindet, abdeckt, so dass die Brause (35) das Behältnis (24) mit Heißwasser versorgen kann,
**dadurch gekennzeichnet, dass** der Filterhalter (2) und der Deckel (3) eine gelenkig gelagerte Einheit bilden, die mit einer magnetischen Rückhaltevorrichtung ausgestattet ist, die ein erstes Element (27), das am Filterhalter (2) befestigt ist, und ein zweites Element (37), das am Deckel (3) befestigt ist, umfasst, die so angeordnet sind, dass sie magnetisch gekoppelt sind, sobald sich der Deckel (3) in der geschlossenen Position befindet.

2. Filterkaffeemaschine nach Anspruch 1, wobei das erste Element (27) der magnetischen Rückhaltevorrichtung einen ersten Dauermagneten (28) umfasst, während das zweite Element (37) einen zweiten Dauermagneten (38) umfasst, wobei der erste und zweite Magnet (28 ; 38) jeweils mit einer Kunststoffschicht (25 ; 39) überzogen sind und eine gegeneinander gerichtete Polarität aufweisen, um die magnetische Kopplungskraft zu erhöhen.

3. Filterkaffeemaschine nach Anspruch 1 oder 2, wobei das erste Element (27) der magnetischen Rückhaltevorrichtung in der Nähe des Heißwassereintritts (33) des Deckels (3) angeordnet ist.

4. Filterkaffeemaschine nach einem der vorhergehenden Ansprüche, wobei der Filterhalter (2) einen oberen Ring (25) aufweist, der die Mündung des Behältnisses (24) umgibt und unter welchem das erste Element (27) zum magnetischen Festhalten angeordnet ist, und der Deckel (3) eine Unterseite (32b) aufweist, auf welcher das zweite Element (37) zum magnetischen Festhalten angeordnet ist, um an den oberen Ring (25) anzugrenzen und dem ersten Element (27) gegenüber zu liegen, sobald sich der Deckel (3) in der geschlossenen Position befindet.

5. Filterkaffeemaschine nach einem der vorhergehenden Ansprüche, wobei der Filterhalter (2) zumindest in seinem oberen Teil einen an sich regelmäßigen Querschnitt mit einer Aussparung (22) aufweist und der Heißwasseraustritt (6) des Gehäuses (1) angepasst ist, um sich in diese Aussparung (22) einzufügen, sobald sich der Filterhalter (2) in der Aufnahme (12) des Gehäuses befindet.

6. Filterkaffeemaschine nach einem der vorhergehenden Ansprüche, wobei der Deckel (3) über eine horizontale Schwenkachse (31) gelenkig auf dem Filterhalter (2) gelagert ist und wobei sich der Deckel (3) in geschlossener Position im Wesentlichen in einer horizontalen Ebene erstreckt, wobei der Heißwassereintritt (33) mit dem Austritt (6) des Gehäuses (1) gemäß einer im Wesentlichen vertikalen Bewegung zusammenwirkt.

7. Filterkaffeemaschine nach Anspruch 6, wobei die Schwenkachse (31) des Deckels (3) so angeordnet ist, dass sie auf der dem Heißwasseraustritt (6) des Gehäuses (1) gegenüberliegenden Seite liegt, sobald sich der Filterhalter (2) in der Aufnahme (12) befindet.

8. Filterkaffeemaschine nach einem der Ansprüche 6 oder 7, wobei der Filterhalter (2) einen Henkel (23) aufweist, in dessen Nähe und über welchem die Schwenkachse (31) des Deckels (3) angeordnet ist.

9. Filterkaffeemaschine nach Anspruch 8, wobei die Schwenkachse (31) des Deckels (3) gemäß einer Richtung (P) angeordnet ist, die senkrecht zur Hauptrichtung des Henkels (23) verläuft, und ein Element (40) zur Betätigung des Deckels mit diesem verbunden ist, so dass er beim Halten des Henkels (23) betätigt werden kann.
